## Europäisches Patentamt

(19) **European Patent Office**

**Office européen des brevets**

(11) Veröffentlichungsnummer: **0 100 852**
**B1**

(12) # EUROPÄISCHE PATENTSCHRIFT

(45) Veröffentlichungstag der Patentschrift:
**19.02.86**

(21) Anmeldenummer: **83106320.1**

(22) Anmeldetag: **29.06.83**

(51) Int. Cl.⁴: **H 02 P 3/08, H 01 Q 1/10,**
**H 02 P 7/00**

(54) **Schaltungsanordnung zum Ein- und Ausfahren einer motorgetriebenen Antenne.**

(30) Priorität: **16.07.82 DE 3226614**

(43) Veröffentlichungstag der Anmeldung:
**22.02.84 Patentblatt 84/8**

(45) Bekanntmachung des Hinweises auf die Patenterteilung:
**19.02.86 Patentblatt 86/8**

(84) Benannte Vertragsstaaten:
**DE FR IT SE**

(56) Entgegenhaltungen:
**WO - A - 81/03715**
**DE - A - 2 428 674**
**DE - A - 2 640 995**
**DE - A - 2 846 993**
**DE - A - 3 011 387**

**Patent Abstracts of Japan Band 4, Nr. 83, 14. Juni 1980**
**Seite 77E15**

(73) Patentinhaber: **ROBERT BOSCH GMBH, Postfach 50,**
**D-7000 Stuttgart 1 (DE)**

(72) Erfinder: **Fassel, Reinhard, Hebelstrasse 9,**
**D-8501 Oberasbach (DE)**
Erfinder: **Meier, Werner, Ringstrasse 33,**
**D-8540 Rednitzhembach (DE)**
Erfinder: **Rauch, Hans, Dr., Distelweg 11, D-8501 Fürth**
**(DE)**
Erfinder: **Wesemeyer, Jürgen, Dipl.-Ing., Klosterweg 122,**
**D-8500 Nürnberg (DE)**
Erfinder: **Raddant, Hans-Joachim, Dipl.-Ing.,**
**Angersburger Allee 41, D-1000 Berlin 19 (DE)**

## Beschreibung

### *Stand der Technik*

Die Erfindung geht aus von einer Schaltungsanordnung zum Ein- und Ausschalten eines elektromotorischen Antriebes nach der Gattung des Hauptanspruchs.

Derartige Schaltungsanordnungen werden beispielsweise für das Aus- und Einfahren eines Antennenteleskops für Kraftfahrzeugantennen oder für Fensterheber oder Schiebedächer in Kraftfahrzeugen angewendet, d. h. für bewegbare Teile, deren Bewegung durch zwei definierte Endlagen begrenzt ist. Bei einer bekannten Schaltungsanordnung für eine motorgetriebene Antenne werden die Relais zum Einschalten des Antennenmotors über elektronische Zeitglieder mit dem Ein- und Ausschalten eines Radios betätigt, so dass beim Einschalten des Radios das Antennenteleskop vollständig ausgefahren und beim Ausschalten des Radios wieder vollständig eingefahren wird. Aufgrund von Spannungsschwankungen, Temperaturänderungen und anderen Störgrössen müssen die Zeitglieder so ausgelegt sein, dass der Antennenmotor beim störungsfreien Betrieb noch über die zum völligen Aus- und Einfahren benötigte Zeit hinaus für eine Zeitreserve eingeschaltet bleibt. Um dabei den Antriebsmotor und das Getriebe nicht unzulässig hoch zu belasten, ist im Antennenantrieb eine Rutschkupplung vorgesehen. Eine solche Lösung ist aber relativ kostenaufwendig, und durch Verschmutzungen oder Vereisungen kann das Aus- oder Einfahren der Antenne so stark verzögert werden, dass die Reservezeit nicht ausreicht und die Antenne in teilweise ausgefahrener Stellung stehenbleibt. Wird die Reservezeit zu gross bemessen, so ergeben sich unter normalen Bedingungen lange Nachlaufzeiten des Motors, die den Benutzer der Antenne irritieren und die das mechanische System unnötig stark beanspruchen.

Es ist ferner bekannt, den Antennenantrieb durch Endlagenschalter abzuschalten, so dass beim Ausfahren oder Einfahren der Antenne der Antrieb erst beim Erreichen der jeweiligen Endstellung abgeschaltet wird, vgl. DE-A Nr. 2640995. Bei derartigen Lösungen besteht aber die Gefahr, dass die Antenne durch Verschmutzung oder Vereisung nicht vollständig aus- oder eingefahren werden kann und dass dann der Antriebsmotor durch Überlastung zerstört wird. Abhilfe könnte ein Überlastungsschutz schaffen, der aber verhältnismässig aufwendig wäre. Im übrigen setzen diese Schalter wegen der erforderlichen Präzision einen hohen mechanischen Aufwand voraus. Sie sind darüber hinaus verschleiss- und korrosionsanfällig, so dass kein einwandfreies Funktionieren über einen längeren Zeitraum gewährleistet ist.

Aus der WO Nr. 81/03715 ist schliesslich eine Schaltungsanordnung für einen elektromotorischen Antrieb bekannt, bei der eine Fliehkraft-Schaltvorrichtung an einem Ende der Antriebswelle des Motors einen Schalter im Motorstromkreis öffnet, sobald die Drehzahl des Motors auf einen bestimmten Drehzahlwert abfällt. Der Schaltmechanismus wird dabei durch mehrere Kugeln bewegt, die bei laufendem Motor durch Zentrifugalkräfte gegen den Schaltmechanismus gedrückt werden und die in Bohrungen geführt sind. Bei dieser mechanischen Lösung ist es nachteilig, dass der Schaltmechanismus durch Verschmutzung oder Verklemmen der Kugeln verstellt, blockiert oder sonstwie beeinträchtigt werden kann. Ausserdem ist die Trägheit der Fliehkraft-Schalteinrichtung relativ gross, so dass beim Auftreffen auf einen Anschlag der Motor zunächst einen relativ grossen Strom verkraften muss, der sowohl die Wicklungen des Motors gefährdet als auch die Kontakte des Schalters beim Abschaltvorgang stark belastet. Zudem wird dabei auch das Getriebe erheblich belastet.

Mit der vorliegenden Lösung wird angestrebt, elektrische Antriebe mit einem Kollektormotor auf einfache Weise mit elektrischen Mitteln gegen Überlastungen zu schützen und sie unmittelbar mit dem Erreichen einer ihrer beiden definierten Endlagen abzuschalten.

### *Vorteile der Erfindung*

Die erfindungsgemässe Schaltungsanordnung mit den kennzeichnenden Merkmalen des Hauptanspruchs hat den Vorteil, dass auf Endschalter und eine Rutschkupplung verzichtet werden kann, indem eine Steuerschaltung den beim Überschreiten einer bestimmten Nennbelastung des Motors auftretenden Drehzahlabfall feststellt und ein schnelles automatisches Abschalten des Motors veranlasst. Durch den Wegfall einer Rutschkupplung ergibt sich ausserdem der Vorteil, dass bei Betätigen der Antenne bei niedriger Temperatur, bei der das Antennenteleskop vereist sein kann, ein erhöhtes, nicht durch die Kupplung begrenztes Motordrehmoment zur Verfügung steht, das die Behinderung durch die Vereisung überwinden kann.

Durch die in den Unteransprüchen aufgeführten Massnahmen sind vorteilhafte Weiterbildungen und Verbesserungen der im Hauptanspruch angegebenen Merkmale möglich. Dabei ist es besonders vorteilhaft, wenn aus der Drehzahl des Antriebsmotors die von dem Antennenteleskop effektiv zurückgelegte Wegstrecke ermittelt und gewünschtenfalls angezeigt wird und wenn die Steuerschaltung die Periodendauer der Welligkeit des Motorstromes erfasst und beim Überschreiten einer bestimmten Periodendauer den Motor über die Relais abschaltet.

Eine ebenfalls besonders vorteilhafte Weiterbildung der Erfindung besteht darin, dass die Schaltungsanordnung bei Inbetriebnahme zunächst die mittlere Drehzahl oder die mittlere Periodendauer der Welligkeit misst und zur Ermittlung des Abschaltwertes für die nachfolgenden Messungen speichert. Dadurch wird die Schaltungsanordnung z. B. an motorgetriebene Teleskopantennen verschiedenen Fabrikats angepasst.

### *Zeichnung*

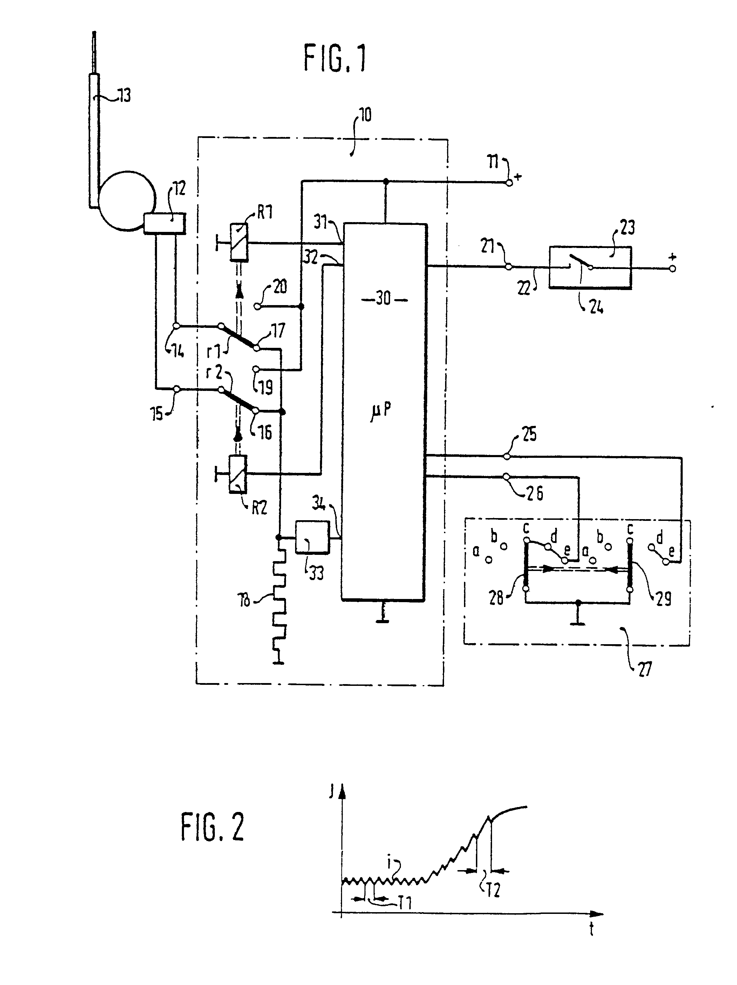

Ein Ausführungsbeispiel der Erfindung ist in der Zeichnung dargestellt und in der nachfolgenden Beschreibung näher erläutert. Es zeigen Fig. 1 die erfindungsgemässe Schaltungsanordnung für das Aus- und Einfahren einer Motorantenne und Fig. 2 den zeitlichen Verlauf des Motorstromes beim Erreichen eines Endanschlages der Antenne.

*Beschreibung des Ausführungsbeispieles*

In Fig. 1 ist die Schaltungsanordnung zum Aus- und Einfahren einer motorgetriebenen Antenne eines Kraftfahrzeuges in einem Schaltgerät 10 untergebracht. Sie liegt über eine Plusklemme 11 an dem Pluspol des Bordnetzes. Ein Kollektormotor 12 für den Antrieb der Teleskopantenne 13 ist an zwei Ausgangsklemmen 14 und 15 des Schaltgerätes 10 angeschlossen. Die Klemmen 14 und 15 sind zwecks Drehrichtungsumkehr des Motors 12 mit zwei Umschaltern verbunden, und zwar gemäss dem vorliegenden Ausführungsbeispiel mit zwei Relaiskontakten r1 und r2 zweier als Umschalter dienender Relais R1, R2, die jeweils von den zugehörigen Wicklungen der Relais R1 und R2 betätigt werden. Die Ruhekontakte 16 und 17 liegen über einen Messwiderstand 18 an Masse, die Arbeitskontakte 19 und 20 sind mit der Plusklemme 11 verbunden. Das Schaltgerät 10 ist ferner mit einer Eingangsklemme 21 an eine Steuerleitung 22 angeschlossen, die mit dem Einschalten eines Autoradios 23 über einen dort angeordneten Einschaltkontakt 24 an Pluspotential gelegt wird. Über zwei weitere Eingangsklemmen 25 und 26 des Schaltgerätes 10 sind ausserdem die Ausgänge eines zweipoligen Kippschalters 27 angeschlossen, mit dem die Ausfahrlänge der Antenne bei eingeschaltetem Autoradio 23 veränderbar ist. Die zwei schwenkbaren Schaltkontakte 28 und 29 des Kippaschalters 27 liegen dabei auf Masse. Der Kippschalter 27 hat fünf Schaltstellungen, deren Funktion später erläutert wird. Er ist in Fig. 1 in einer mittleren Schaltstellung dargestellt.

Für die Steuerung der Relais R1 und R2 ist eine Steuerschaltung vorgesehen, die durch einen Mikroprozessor 30 realisiert ist. Der Mikroprozessor 30 erhält über die Plusklemme 11 seine Versorgungsspannung und über die Eingangsklemme 21 vom Autoradio 23 ein Signal zum Aus- bzw. Einfahren der Antenne 13. Die Relais R1 und R2 werden über die Ausgänge 31 und 32 des Mikroprozessors 30 geschaltet. Ein Signaleingang 34 des Mikroprozessors 30 ist über einen Signalumformer 33 am Messwiderstand 18 im Versorgungsstromkreis des Motors 12 für den Antennenantrieb angeschlossen. Ausserdem ist der Kippschalter 27 über die Eingangsklemmen 25 und 26 mit dem Mikroprozessor 30 eingangsseitig verbunden.

Die Wirkungsweise der Schaltungsanordnung nach Fig. 1 wird im folgenden anhand der Fig. 2 näher erläutert, in welcher der zeitliche Verlauf des Stromes i für den Motor 12 vor und nach dem Erreichen eines Endanschlages der Antenne dargestellt ist. Im Ruhezustand, d. h. bei ausgeschaltetem Autoradio 23 (Schalter 24 geöffnet), sind die Klemmen 14 und 15 des Motors 12 kurzgeschlossen. Im Beispielsfall soll nun die Antenne 13 vollständig ausgefahren werden. Hierfür ist zunächst der Kippschalter 27 in eine erste Schaltstellung a zu bringen, wodurch die Schaltkontakte 28 und 29 in die linke Endlage geschwenkt werden. In dieser Schaltstellung wird keine der beiden Eingangsklemmen 25 und 26 über den Kippschalter 27 auf Masse gelegt. Mit dem Einschalten des Radios 23 gibt nun der Mikroprozessor 30 an seinem Ausgang 31 eine Steuerspannung ab, die das Relais R1 erregt. Dadurch wird der zugehörige Relaiskontakt r1 umgeschaltet und mit dem Arbeitskontakt 20 verbunden, so dass ein Motorstrom i von der Plusklemme 11 über den Relaiskontakt r1 zum Motor 12 und von dort über den Relaiskontakt r2, den Ruhekontakt 16 des Relais R2 und über den Messwiderstand 18 zur Masse fliesst. Dabei tritt am Messwiderstand 18 ein zum Motorstrom proportionaler Spannungsabfall auf, der dem Signalumformer 33 zugeführt wird. Da der Motorstrom im Motor 12 durch Bürsten über einen umlaufenden Kollektor fliesst, tritt im Motorstrom i eine Welligkeit auf, die beim Durchlaufen der Kollektorlamellen an den Bürsten des Motors 12 entsteht. Die Periodendauer dieser Welligkeit ist umgekehrt proportional bzw. die Frequenz ist proportional zur Drehzahl des Motors 12. In dem am Messwiderstand 18 angeschlossenen Signalumformer 33 wird nun die Welligkeit des Motorstromes i erfasst, und entsprechende digitale Pulse werden an den Eingang des Mikroprozessors 30 gegeben. Die digitalen Pulse am Ausgang des Signalumformers 33 haben dabei die gleiche Frequenz wie die Welligkeit des Motorstromes i. Der Mikroprozessor 30 ermittelt die Periodendauer der Welligkeit des Motorstromes. Sie ist in Fig. 2 für das Ausfahren bzw. Einfahren der Antenne 13 mit T1 angegeben.

Erreicht nun die Antenne nach dem Ausfahren ihren Endanschlag, so geht die Motordrehzahl gegen Null, der Motorstrom erhöht sich und die Welligkeit des Motorstromes i nimmt in ihrer Frequenz stark ab. Folglich nimmt entsprechend die mit T2 bezeichnete Periodendauer beim Erreichen des Anschlages stark zu. Der Frequenzabfall der Welligkeit bzw. die Verlängerung der Periodendauer der Welligkeit wird über den Signalumformer 33 vom Mikroprozessor 30 erfasst. Beim Überschreiten eines bestimmten, im Mikroprozessor 30 eingestellten Zeitwertes für die Periodendauer bzw. bei einem entsprechenden Frequenzabfall der Welligkeit des Motorstromes i schaltet der Mikroprozessor 30 über den Ausgang 31 das Relais R1 und damit den Motor 12 ab.

Um eine Beschädigung des Antennenantriebes beim Auffahren der Antenne auf den Anschlag zu vermeiden, wird der Motor 12 unverzüglich durch Kurzschlussbremsung stillgesetzt, indem der Motorstromkreis r1 und r2 — wie in Fig. 1 dargestellt — kurzgeschlossen wird. Bei Drehrichtungsumkehr hält der Mikroprozessor 30 eine Pausenzeit von 0,5 s ein, so dass der Motor 12 vorher zum Stillstand kommt.

Der Mikroprozessor 30 zählt ausserdem die an seinem Signaleingang 34 auftretenden digitalen Pulse, die mit der Frequenz der Welligkeit des Motorstromes i im Signalumformer 33 erzeugt werden. Durch einen Vergleich der Zahl der bis zum Stillstand des Antennenteleskop an dem Signaleingang 34 eingegangenen Signale mit einem vorgegebenen Wert erkennt der Mikroprozessor 30, ob die Antenne 13 beim Aus- oder Einfahren gegen ihren Endanschlag gelaufen ist oder ob sie vorher auf ein Hindernis trifft. Sollte dies z. B. durch Verschmutzung oder Vereisung der Fall sein, so wird ebenfalls aufgrund der grösseren Periodendauer der Welligkeit des Motorstromes i der Motor 12 zunächst vom Mikroprozessor 30 abgeschaltet. Anschliessend wird jedoch der Motor 12 vom Mikroprozessor 30 durch ein entsprechendes Programm noch zweimal wieder eingeschaltet, so dass der Motor 12 mit vollem Drehmoment anfährt und versucht, das Hindernis zu überwinden. Gelingt dies auch beim zweiten Mal nicht, so wird der Motor 12 vom Mikroprozessor 30 endgültig abgeschaltet. Der entsprechende Vorgang wiederholt sich in gleicher Weise beim Abschalten des Radios 23. In diesem Fall wird das Pluspotential von der Eingangsklemme 21 weggeschaltet und der Mikroprozessor 30 schaltet daraufhin über den Ausgang 32 das Relais R2 zum Einfahren der Antenne 13 ein.

Mit dem Kippschalter 27 soll ermöglicht werden, die Ausfahrlänge der Antenne an die örtlichen Empfangsbedingungen anzupassen. Wie bereits ausgeführt, wird die Antenne mit dem Ein- und Ausschalten des Radios 33 vollständig aus- bzw. eingefahren, wenn der Kippschalter 28 nach links in die erste Schaltstellung a geschwenkt ist. In seiner in Fig. 1 dargestellten Mittellage nimmt er eine zweite Schaltstellung c ein, bei der lediglich die Eingangsklemme 26 des Schaltgerätes 10 über den Schaltkontakt 28 des Kippschalters 27 auf Masse gelegt ist. Da die Eingangsklemme 25 nicht auf Masse liegt, kann diese zweite Schaltstellung des Kippschalters 27 vom Mikroprozessor 30 erfasst werden. In dieser zweiten Schaltstellung c des Kippschalters 27 wird nun die Antenne 13 über dem Mikroprozessor 30 bei eingeschaltetem Radio 23 in eine halbausgefahrene Stellung geführt, indem zunächst über den Ausgang 31 des Mikroprozessors 30 das Relais R1 eingeschaltet wird und anschliessend über den Signaleingang 34 die Zahl der Umdrehungen des Motors 12 durch Abzählen der Impulse des Motorstromes i erfasst wird. Sobald eine bestimmte Anzahl von Signalimpulsen am Signaleingang 34 vom Mikroprozessor 30 erfasst ist, wird über den Ausgang 31 das Relais R1 ausgeschaltet und damit der Motor 12 abgeschaltet. Der Mikroprozessor 30 ist so programmiert, dass die zum Abschalten erforderliche Impulszahl am Signaleingang 34 bei halbausgefahrener Antenne 13 erreicht ist. War der Kippschalter 27 zuvor in seiner ersten Schaltstellung a, und wird erst nach dem Einschalten des Radios 23 in seine zweite Schaltstellung c gemäss Fig. 1 gekrippt, so wird durch ein entsprechendes Programm des Mikroprozessors 30 die Antenne 13 wieder zu Hälfte eingefahren.

Soll beim Abspielen von Tonbandkassetten die Antenne 13 mit dem Einschalten des Radios 23 nicht ausgefahren werden, so wird der Kippschalter 27 in eine dritte Schaltstellung e ganz nach rechts geschwenkt, so dass die Eingangsklemmen 25 und 26 über die Schaltkontakte 28 und 29 des Kippschalters 27 auf Masse gelegt sind. Diese Schaltstellung wird daher über die Eingangsklemmen 25 und 26 vom Mikroprozessor 30 erfasst. Durch ein entsprechendes Programm wird sichergestellt, dass beim Einschalten des Radios 23 die Antenne 13 nicht ausgefahren wird. Wird dagegen bei eingeschaltetem Radio 23 der Kippschalter 27 in die dritte Schaltstellung e nach rechts geschwenkt, so schaltet der Mikroprozessor 30 über den Ausgang 32 das Relais R2 ein, so dass die Antenne 13 eingefahren wird.

Der Kippschalter 27 ist ausserdem noch mit zwei Taststellungen b und d versehen, die sich jeweils zwischen zwei Schaltstellungen befinden. Über diese Taststellungen kann die Antenne 13 jeweils schrittweise weiter ein- bzw. ausgefahren werden. Der Kippschalter ist dabei zunächst in die zweite Schaltstellung c gemäss Fig. 1 zu stellen. Bei eingeschaltetem Radio 23 fährt dann die Antenne 13 zur Hälfte aus. Wird nun der Kippschalter 27 kurzzeitig nach links in die erste Taststellung b bewegt, so wird damit die Masseverbindung der Eingangsklemme 26 über den Schaltkontakt 28 des Kippschalters 27 unterbrochen. Dadurch schaltet der Mikroprozessor 30 über den Ausgang 31 das Relais R1 ein und die Antenne 13 wird weiter ausgefahren. Der nun zurückgelegte Weg der Antenne 13 wird wiederum am Signaleingang 34 vom Mikroprozessor 30 erfasst. Nach einem vom Mikroprozessor 30 vorgegebenen Weg von etwa 10 cm Ausfahrlänge der Antenne 13 schaltet der Mikroprozessor 30 das Relais R1 wieder ab, sofern der Kippschalter 27 wieder in die Mittellage c zurückgeschwenkt ist. Wird dagegen der Kippschalter 27 in dieser Taststellung festgehalten, so fährt die Antenne 13 vollständig aus. Soll dagegen die Antenne weiter eingefahren werden, so wird der Kippschalter 27 kurzzeitig nach rechts in die zweite Taststellung d geschwenkt. Dadurch wird nun auch die Eingangsklemme 25 kurzzeitig über den Schaltkontakt 29 auf Masse gelegt, was vom Mikroprozessor 30 erfasst wird. Dieser schaltet nun über den Ausgang 32 das Relais R2 ein und die Antenne wird in entsprechender Weise eine bestimmte Weglänge eingefahren und anschliessend schaltet der Mikroprozessor 30 den Motor 12 ab. Wird der Kippschalter 27 dagegen in dieser zweiten Taststellung festgehalten, so fährt die Antenne 13 vollständig ein.

Auf diese Weise ist es möglich, im sendernahen Bereich ebenso wie bei entfernten Sendern durch eine veränderbare Antennenlänge die Empfangsbedingungen am Autoradio 23 auf den eingestellten Sender anzupassen.

Da die Belastung des Antriebsmotors 12 bei verschiedenen Typen von Antrieben sowie im wesentlichen auch von der Umgebungstemperatur abhängt, ist die durch den Mikroprozessor realisierte Steuerschaltung 30 lernfähig aufgebaut, indem mit dem Einschalten des Antriebsmotors 30 zunächst in einer ersten Zeitperiode von beispielsweise 1 s über den Messwiderstand und den Signalformer 33 die mittlere Welligkeit des Motorstromes i ermittelt wird. Der ermittelte Wert wird nun abgespeichert und jeweils mit dem gerade gemessenen Wert verglichen. Beim Überschreiten der fortlaufend gemessenen Periodendauer um einen vorgegebenen Prozentsatz vom gespeicherten Wert wird dann der Motor 12 über die Relais R1, R2 abgeschaltet. Dadurch ist es möglich, Frequenzabweichungen in der Welligkeit des Motorstromes i, die durch unterschiedliche Motortypen, Antriebe, unterschiedliche Umgebungsbedingungen, durch Alterung und Verschmutzung des Antriebes sowie durch Fertigungsstreuungen des Gesamtantriebes zu eliminieren. Im Beispielsfall ist der Mikroprozessor 30 so programmiert, dass der Motor 12 erst beim Überschreiten der zuvor ermittelten mittleren Periodendauer um 50% abgeschaltet wird.

Die Erfindung ist nicht auf das dargestellte Ausführungsbeispiel beschränkt, da anstelle einer motorgetriebenen Antenne auch andere hin- und hergehende Vorrichtungen des Kraftfahrzeuges wie beispielsweise Schiebedächer und Fensterscheiben in gleicher Weise gesteuert werden können. Für ein grösseres Messsignal für die Welligkeit des Motorstromes lässt sich anstelle eines niederohmigen Messwiderstandes 18 ein Stromwandler verwenden. Ferner können anstelle der Relais R1 und R2 auf entsprechende Schaltleistungen dimensionierte Halbleiter verwendet werden. Anstelle des Kippschalters 27 ist es möglich, ein Potentiometer bzw. einen Schalter mit Potentiometer zu verwenden, dessen Stellung von der Steuerschaltung 30 abgefragt wird und für die Steuerschaltung die Ausfahrlänge der Antenne 13 oder eines anderen Antriebes vorgibt. Ausserdem kann die Schaltungsanordnung 30 derart erweitert werden, dass sie über eine Leuchtdiodenkette die ermittelte Position der Antenne bzw. die Ausfahrlänge anzeigt. Um eine Zerstörung des Antennenantriebes beim Verklemmen oder Vereisen durch wiederholtes Einschalten von Hand zu vermeiden, ist es ebenfalls möglich, dass die Steuerschaltung beim Erkennen solch aussergewöhnlicher Betriebszustände ein Anzeige-Signal abgibt und ggf. gleichzeitig den Antrieb für eine längere Zeit endgültig abschaltet.

## Patentansprüche

1. Schaltungsanordnung zum Ein- und Ausschalten eines elektromotorischen Antriebes in oder zwischen zwei definierten Endlagen mit einem Antriebsmotor (12), der über ein steuerbares Schaltelement (R1, R2) für die eine oder andere Drehrichtung von einem handbetätigten Schalter (24) einschaltbar ist, und mit einer Steuerschaltung (30), die einen mit dem handbetätigten Schalter (24) zu verbindenden Eingang (21) und einen den Schalter (24) umgehenden Ausgang (31, 32) hat, und dass die Steuerschaltung (30) mit einem Messglied (18) zur Erfassung der Drehzahl des Antriebsmotors (12) verbunden ist, welches die Steuerschaltung (30) bei einem bestimmten, durch eine äussere mechanische Bremsung bedingten Drehzahlabfall den Antriebsmotor (12) abschaltet, dadurch gekennzeichnet, dass das Messglied (18) in dem Versorgungsstromkreis eines als Gleichstrom-Kollektormotor ausgebildeten Antriebsmotors (12) liegt, welches die Welligkeit des Motorstromes (i) erfasst und entsprechende Signale an die Steuerschaltung (30) liefert, deren Frequenz der Drehzahl des Antriebsmotors (12) proportional ist, und dass die Abschaltung des Antriebsmotors (12) erfolgt, wenn die Frequenz einen bestimmten Abschaltwert erreicht.

2. Schaltungsanordnung nach Anspruch 1, dadurch gekennzeichnet, dass das Messglied (18) über einen Signalumformer (33) an die Steuerschaltung (30) angeschlossen ist.

3. Schaltungsanordnung nach Anspruch 2, dadurch gekennzeichnet, dass das Messglied (18) ein mit dem Motor (12) in Reihe geschalteter Messwiderstand ist, der mit dem Eingang des Signalumformers (33) verbunden ist.

4. Schaltungsanordnung nach Anspruch 2, dadurch gekennzeichnet, dass das Messglied (18) ein mit dem Motor (12) in Reihe geschalteter Stromwandler ist.

5. Schaltungsanordnung nach Anspruch 2, dadurch gekennzeichnet, dass die Steuerschaltung (30) über den Signalumformer (33) die mittlere Periodendauer (T1) der Welligkeit des Motorstromes (i) erfasst, speichert und beim Überschreiten dieser Periodendauer um einen vorgegebenen Prozentsatz über die Schaltelemente (R1, R2) den Motor (12) abschaltet.

6. Schaltungsanordnung nach Anspruch 1 oder einem der folgenden, dadurch gekennzeichnet, dass der Antrieb in störungsfreiem Betrieb eine Teleskopantenne (13) in einem Kraftfahrzeug beim Ein- und Ausschalten eines Autoradios (23) in eine von zwei Endlagen ein- bzw. ausfährt und dort stillsetzt.

7. Schaltungsanordnung nach Anspruch 6, dadurch gekennzeichnet, dass die Steuerschaltung (30) den Motor (12) nach dem Abschalten in nicht voll aus- oder eingefahrener Stellung der Antenne noch mehrmals wieder einschaltet.

8. Schaltungsanordnung nach Anspruch 2 oder 3, dadurch gekennzeichnet, dass der Signalumformer (33) digitale, durch die Welligkeit des Motorstromes (i) ausgelöste Pulse an den Steuereingang (34) der Steuerschaltung (30) abgibt.

9. Schaltungsanordnung nach Anspruch 8, dadurch gekennzeichnet, dass die Steuerschaltung (30) die im Signalumformer (33) erzeugten digitalen Pulse als Mass für die Ausfahrlänge der Antenne zählt.

10. Schaltungsanordnung nach Anspruch 9, dadurch gekennzeichnet, dass die Steuerschaltung (30) bei einer vorgewählten Anzahl der gezählten Pulse den Antrieb ausschaltet.

11. Schaltungsanordnung nach Anspruch 9 oder 10, dadurch gekennzeichnet, dass die von der Steuerschaltung (30) ermittelte Position der Antenne (13) angezeigt wird.

12. Schaltungsanordnung nach einem der vorhergehenden Ansprüche, dadurch gekennzeichnet, dass die Steuerschaltung (30) über weitere Eingänge (25, 26) mit einem Schalter (27) für eine veränderbare Ausfahrlänge der Antenne (13) verbunden ist.

13. Schaltungsanordnung nach Anspruch 12, dadurch gekennzeichnet, dass der Schalter (27) in einer ersten Schaltstellung (a) bei eingeschaltetem Radio (23) die Antenne (13) über die Steuerschaltung (30) in ihre voll ausgefahrene Stellung fährt.

14. Schaltungsanordnung nach Anspruch 13, dadurch gekennzeichnet, dass der Schalter (27) in einer zweiten Schaltstellung (c) bei eingeschaltetem Radio (23) die Antenne (13) über die Steuerschaltung (30) in eine teilweise ausgefahrene Stellung fährt.

15. Schaltungsanordnung nach Anspruch 13 oder 14, dadurch gekennzeichnet, dass der Schalter (27) in einer dritten Schaltstellung (e) bei eingeschaltetem Radio (23) die Antenne (13) über die Steuerschaltung (30) in ihre eingefahrene Stellung fährt bzw. sie dort stehen lässt.

16. Schaltungsanordnung nach Anspruch 15, dadurch gekennzeichnet, dass der Schalter (27) bei eingeschaltetem Radio (23) in einer ersten Taststellung (b) die Antenne (13) über die Steuerschaltung (30) jeweils um eine bestimmte Länge weiter ausfährt und in einer zweiten Taststellung (d) jeweils um eine bestimmte Länge einfährt.

17. Schaltungsanordnung nach Anspruch 16, dadurch gekennzeichnet, dass der Schalter (27) als Kippschalter ausgebildet ist, der eine mittlere Schaltstellung (c) aufweist und beidseitig davon zunächst eine Taststellung (b, d) und dann eine einrastende Schaltstellung (a, e) hat.

18. Schaltungsanordnung nach Anspruch 17, dadurch gekennzeichnet, dass bei kurzzeitiger Betätigung des Schalters (27) in eine der zwei Taststellungen (b, c) die Steuerschaltung (30) den Motor einschaltet, die aus den Umdrehungen des Motors bzw. aus der Frequenz der Welligkeit des Motorstromes (i) vom Signalumformer (33) erzeugten digitalen Pulse zählt und beim Erreichen einer bestimmten Anzahl den Motor (12) abschaltet.

19. Schaltungsanordnung nach Anspruch 12, dadurch gekennzeichnet, dass der Schalter (27) mit einem Potentiometer versehen ist, dessen Stellung der Steuerschaltung (30) die Ausfahrlänge der Antenne (13) vorgibt.

20. Schaltungsanordnung nach einem der vorherigen Ansprüche, dadurch gekennzeichnet, dass die Steuerschaltung (30) den Motor (12) bei Drehrichtungsumkehr erst nach einer vorgegebenen Pausenzeit einschaltet.

21. Schaltungsanordnung nach einem der vorherigen Ansprüche, dadurch gekennzeichnet, dass die Steuerschaltung (30) Teil eines Mikroprozessors ist.

22. Schaltungsanordnung nach Anspruch 1, dadurch gekennzeichnet, dass die Steuerschaltung (30) beim Erkennen aussergewöhnlicher Betriebszustände (Drehzahl, Periodendauer der Welligkeit, Strom) ein Anzeige-Signal abgibt.

23. Schaltungsanordnung nach den Ansprüchen 1, 2 und 4, dadurch gekennzeichnet, dass sie bei Inbetriebnahme zunächst die mittlere Frequenz oder die mittlere Periodendauer der Welligkeit misst und zur Ermittlung des Abschaltwertes für die nachfolgenden Messungen speichert.

## Claims

1. Circuit arrangement for switching an electromotive actuator on and off in or between two defined limit positions, comprising an actuator motor (12) which can be switched on by a manually operated switch (24) via a controlable switching element (R1, R2) for one or the other direction of rotation and comprising a control circuit (30) which has an input (21) which is to be connected to the manually operated switch (24) and an output (31, 32) which bypasses the switch (24) and that the control circuit (30) is connected to a sensing element (18) for detecting the speed of rotation of the actuator motor (12), which sensing element switches the actuator motor (12) off via the control circuit (30) at a certain drop in the speed of rotation caused by external mechanical braking, characterised in that the sensing element (18) is located in the supply circuit of an actuator motor (12), which is constructed as a direct-current collector motor, which sensing element detects the ripple of the motor current (i) and supplies corresponding signals to the control circuit (30) the frequency of which signals is proportional to the speed of rotation of the actuator motor (12) and that the actuator motor (12) is switched off when the frequency reaches a particular switching-off value.

2. Circuit arrangement according to Claim 1, characterised in that the sensing element (18) is connected to the control circuit (30) via a signal converter (33).

3. Circuit arrangement according to Claim 2, characterised in that the sensing element (18) is a sensing resistor which is connected in series with the motor (12) and which is connected to the input of the signal converter (33).

4. Circuit arrangement according to Claim 2, characterised in that the sensing element (18) is a current transformer which is connected in series with the motor (12).

5. Circuit arrangement according to Claim 2, characterised in that the control circuit (30) detects, via the signal converter (33), and stores the mean duration (T1) of the period of the ripple of the motor current (i) and switches off the motor (12) via the switching elements (R1, R2) if this duration of the period is exceeded by a predetermined percentage.

6. Circuit arrangement according to Claim 1 or one of the subsequent claims, characterised in that the actuator, in interference-free operation, retracts or extends a telescopic antenna (13) in a motor vehicle into one of two limit positions, and there stops this antenna, when a car radio (23) is switched on or off.

7. Circuit arrangement according to Claim 6, characterised in that the control circuit (30) switches the motor (12) on again several times after the antenna has been switched off in a not fully extended or retracted position.

8. Circuit arrangement according to Claim 2 or 3, characterised in that the signal converter (33) supplies digital pulses, triggered by the ripple of the motor current (i), to the control input (34) of the control circuit (30).

9. Circuit arrangement according to Claim 8, characterised in that the control circuit (30) counts the digital pulses generated in the signal converter (33) as a measure of the extended length of the antenna.

10. Circuit arrangement according to Claim 9, characterised in that the control circuit (30) switches off the actuator at a preselected number of counted pulses.

11. Circuit arrangement according to Claim 9 or 10, characterised in that the position of the antenna (13) determined by the control circuit (30) is indicated.

12. Circuit arrangement according to one of the preceding claims, characterised in that the control circuit (30) is connected via other inputs (25, 26) to a switch (27) for a variable extended length of the antenna (13).

13. Circuit arrangement according to Claim 12, characterised in that the switch (27) in a first switching position (a) drives the antenna (13) via the control circuit (30) into its fully extended position if the radio (23) is switched on.

14. Circuit arrangement according to Claim 13, characterised in that the switch (27) in a second switching position (c) drives the antenna (13) via the control circuit (30) into a partially extended position when the radio (23) is switched on.

15. Circuit arrangement according to Claim 13 or 14, characterised in that the switch (27) in a third switching position (e) drives the antenna (13) via the control circuit (30) into its retracted position or leaves it there when the radio (23) is switched on.

16. Circuit arrangement according to Claim 15, characterised in that the switch (27), in a first momentary-contact position (b), further extends the antenna (13) via the control circuit (30) in each case by a certain length and, in a second momentary-contact position (d), retracts the antenna in each case by a certain length when the radio (23) is switched on.

17. Circuit arrangement according to Claim 16, characterised in that the switch (27) is constructed as a tumbler switch which has a centre switching position (c) and on both sides of this, first a momentary-contact position (b, d) and then a latching switching position (a, e).

18. Circuit arrangement according to Claim 17, characterised in that with momentary operation of the switch (27) into one of the two momentary-contact positions (b, c), the control circuit (30) switches the motor on, counts the digital pulses generated by the signal converter (33) from the revolutions of the motor or of the frequency of the ripple of the motor current (i) and switches the motor (12) off when a certain number of pulses has been reached.

19. Circuit arrangement according to Claim 12, characterised in that the switch (27) is provided with a potentiometer the position of which predetermines the extended length of the antenna (13) for the control circuit (30).

20. Circuit arrangement according to one of the preceding claims, characterised in that the control circuit (30) switches the motor (12) on only after a predetermined time interval when the direction of rotation is reversed.

21. Circuit arrangement according to one of the preceding claims, characterised in that the control circuit (30) is a part of a microprocessor.

22. Circuit arrangement according to Claim 1, characterised in that the control circuit (30) emits an indicating signal when unusual operating conditions (speed of rotation, duration of the ripple period, current) are detected.

23. Circuit arrangement according to Claims 1, 2 and 4, characterised in that, when it is taken into operation, it first measures the mean frequency or the mean duration of the ripple period and stores this value for determining the switching-off value for the subsequent measurements.

**Revendications**

1. Dispositif de circuit pour connecter et déconnecter dans deux positions terminales définies ou bien entre ces positions, un entraînement par un moteur électrique, avec un moteur d'entraînement (12) qui, par l'intermédiaire d'un élément de commutation (R1, R2) susceptible d'être commandé, est susceptible d'être enclenché dans un sens de rotation ou dans l'autre par un commutateur (24) manœuvré manuellement, et avec un circuit de commande (30) qui a une entrée (21) pouvant être reliée au commutateur (24) manœuvré manuellement et une sortie (31, 32) contournant le commutateur (24), ce ciruit de commande (30) étant relié à un organe de mesure (18) pour détecter la vitesse de rotation du moteur d'entraînement (12), cet organe déconnectant le circuit de commande (30) pour un abaissement déterminé, provoqué par un dipositif mécanique de freinage extérieur, de la vitesse de rotation du moteur d'entraînement (12), dispositif de circuit caractérisé en ce que l'organe de mesure (18) est placé dans le circuit d'alimentation en courant d'un moteur d'entraînement (12) revêtant la forme d'un moteur à courant continu à collecteur, cet organe captant l'ondulation du courant moteur (1) et délivrant des signaux correspondants au circuit de commande (30), dont la fréquence est proportionnelle à la vitesse de rotation du moteur d'entraînement (12), et la déconnexion du moteur d'entraînement (12) s'effectuant lorsque la fréquence atteint une valeur de coupure déterminée.

2. Dispositif de circuit selon la revendication 1, caractérisé en ce que l'organe de mesure (18) est raccordé au circuit de commande (30) par l'intermédiaire d'un dispositif de mise en forme des signaux (33).

3. Dispositif de circuit selon la revendication 2, caractérisé en ce que l'organe de mesure (18) est une résistance de mesure branchée en série avec le moteur (12) et qui est relié à l'entrée du dispositif de mise en forme des signaux (33).

4. Dispositif de circuit selon la revendication 2, caractérisé en ce que l'organe de mesure (18) est un convertisseur de courant branché en série avec le moteur (12).

5. Dispositif de circuit selon la revendication 2, caractérisé en ce que le circuit de commande (30) détecte par l'intermédiaire du dispositif de mise en forme des signaux (33) la durée moyenne de la période (T1) de l'ondulation du courant moteur (i), la met en mémoire et, lors du dépassement d'un pourcentage déterminé de cette durée de période, déconnecte par l'intermédiaire des éléments de commutation (R1, R2) le moteur (12).

6. Dispositif de circuit selon la revendication 1 ou l'une des suivantes, caractérisé en ce que l'entraînement, lors de la mise en circuit et hors circuit d'un autoradio (23), déplace selon un fonctionnement sans à-coups, une antenne télescopique (13) sur un véhicule automobile dans l'une de deux positions terminales ou bien à partir de cette position et la stabilise dans ses positions.

7. Dispositif de circuit selon la revendication 6, caractérisé en ce que le circuit de commande (30) après la déconnexion du moteur (12) alors que l'antenne n'est pas complètement sortie de sa position ou ne l'a pas complètement atteinte, connecte à nouveau plusieurs fois le moteur.

8. Dispositif de circuit selon l'une des revendications 2 ou 3, caractérisé en ce que le dispositif de mise en forme des signaux (33) délivre des impulsions numériques, déclenchées par l'ondulation du courant moteur (i), à l'entrée de commande (34) du circuit de commande (30).

9. Dispositif de circuit selon la revendication 8, caractérisé en ce que le circuit de commande (30) compte les impulsions numériques engendrées dans le dispositif de mise en forme des signaux (33) pour servir de mesure pour la longueur de sortie de l'antenne.

10. Dispositif de circuit selon la revendication 9, caractérisé en ce que le circuit de commande (30) déconnecte l'entraînement pour un nombre présélectionné des impulsions ainsi comptées.

11. Dispositif de circuit selon l'une des revendications 9 ou 10, caractérisé en ce que la position de l'antenne (13) déterminée par le circuit de commande (30) est affichée.

12. Dispositif de circuit selon l'une des revendications précédentes, caractérisé en ce que le circuit de commande (30) est relié par l'intermédiaire d'autres entrées (25, 26) à un commutateur (27) pour une longueur de sortie de l'antenne (13) susceptible d'être modifiée.

13. Dispositif de circuit selon la revendication 12, caractérisé en ce que le commutateur (27), dans une première position de commutation (a), déplace lorsque la radio (23) est enclenchée l'antenne (13) par l'intermédiaire du circuit de commande (30) dans sa position complètement sortie.

14. Dispositif de circuit selon la revendication 13, caractérisé en ce que le commutateur (27), dans une seconde position de commutation (c), déplace lorsque la radio (23) est enclenchée l'antenne (13) par l'intermédiaire du circuit de commande (30) dans une position de sortie partielle.

15. Dispositif de circuit selon l'une des revendications 13 ou 14, caractérisé en ce que le commutateur (27), dans une troisième position de commutation (e), déplace lorsque la radio (23) est enclenchée l'antenne (13) par l'intermédiaire du circuit de commande (30) dans sa position de déplacement, ou bien la laisse dans cette position.

16. Dispositif de circuit selon la revendication 15, caractérisé en ce que le commutateur (27), lorsque la radio (23) est enclenchée, continue à sortir, dans une première position de palpage (b), l'antenne (13) par l'intermédiaire du circuit de commande (30) sur une longueur déterminée et, dans une seconde position de palpage (d), la rentre sur une longueur déterminée.

17. Dispositif de circuit selon la revendication 16, caractérisé en ce que le commutateur (27) est un commutateur basculant, qui comporte une position de commutation médiane (c) et qui de part et d'autre de celle-ci a tout d'abord une position de palpage (b, d) et ensuite une position de commutation (a, e) s'encliquetant.

18. Dispositif de circuit selon la revendication 17, caractérisé en ce que lors d'un actionnement de courte durée du commutateur (27) dans l'une des deux positions de palpage (b, c) le circuit de commande (30) connecte le moteur, compte les impulsions numériques engendrées à partir des révolutions du moteur ou bien à partir de la fréquence d'ondulation du courant moteur (i) par le dispositif de mise en forme des signaux (33) et déconnecte le moteur lorsqu'un nombre déterminé d'impulsions est atteint.

19. Dispositif de circuit selon la revendication 12, caractérisé en ce que le commutateur (27) est muni d'un potentiomètre dont la position prédéfinit pour le circuit de commande (30) la longueur de sortie de l'antenne (13).

20. Dispositif de circuit selon l'une des revendications précédentes, caractérisé en ce que le circuit de commande (30) ne connecte le moteur (12) lors d'une inversion de sens de rotation qu'après un temps d'arrêt prédéfini.

21. Dispositif de circuit selon l'une des revendications précédentes, caractérisé en ce que le circuit de commande (30) fait partie d'un microprocesseur.

22. Dispositif de circuit selon la revendication 1, caractérisé en ce que le circuit de commande (30) lorsqu'il détecte des états de fonctionnement inhabituels (vitesse de rotation, durée des périodes de l'ondulation, courant) délivre un signal d'affichage.

23. Dispositif de circuit selon les revendications

**0 100 852**

1, 2 et 4, caractérisé en ce que, lors de la mise en service, il mesure tout d'abord la fréquence moyenne ou bien la durée moyenne de la période de l'ondulation et la met en mémoire pour déterminer la valeur de déconnexion pour les mesures suivantes.

# FIG. 1

# FIG. 2